# EUROPEAN PATENT APPLICATION

(11) **EP 4 219 995 A1**
(43) Date of publication of application: **02.08.2023**
(21) Application number: 22305090.7
(22) Date of filing: 27.01.2022
(51) Int. Cl.: F16L 11/127, F16L 11/22, H01B 7/04

(54) **STATIC SERVICE UMBILICAL**

(71) Applicant: Nexans, 92400 Courbevoie (FR)
(72) Inventor: OPSTAD, Ketil, 1712 GRALUM (NO); HAVIK, Eivind, 1715 YVEN (NO)
(74) Representative: Ipsilon

(57) **Abstract**

The present invention relates to a static service umbilical (10) for connection between a first stationary subsea unit (3) located on the seabed (SB) and a second stationary subsea unit (5) located on the seabed (SB). The static service umbilical (10) comprises a service fluid tube (12); a positive electrically insulated DC conductor (13a) provided radially outside of the fluid tube (12); a negative electrically insulated DC conductor (13b) provided radially outside of the fluid tube (12); a fibre optic cable (14a) provided radially outside of the fluid tube (12); and an outer sheath (20) provided outside of the positive DC conductor (13a), the negative DC conductor (13b) and the fibre optic cable (14a).

## Description

### FIELD OF THE INVENTION

The present invention relates to a static service umbilical for connection between a first stationary subsea unit located on the seabed and a second stationary subsea unit located on the seabed. The present invention also relates to a subsea oil and/or gas production system.

### BACKGROUND OF THE INVENTION

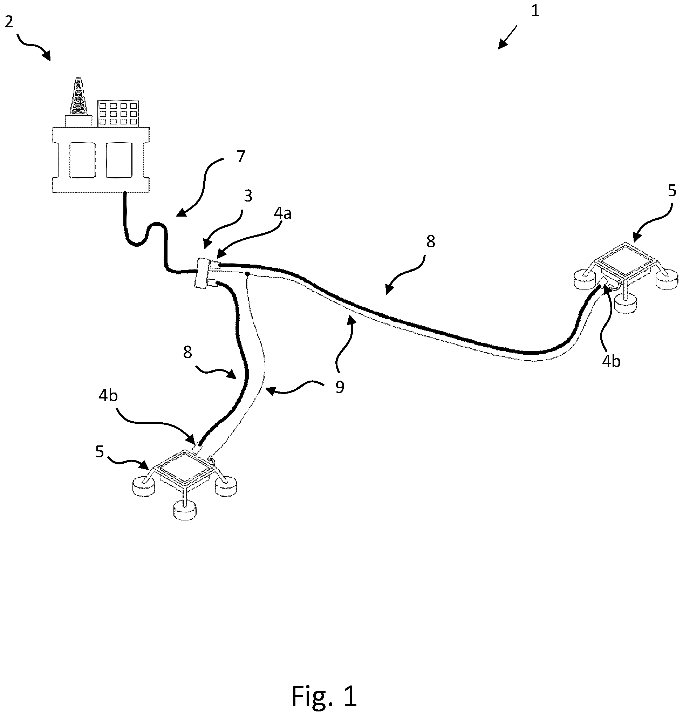

It is known several types of cables for use subsea. In fig. 1, a prior art installation 1 is shown. The installation 1 comprises a floating unit 2, a first stationary subsea unit 3 and two second stationary subsea units 5, here shown in the form of templates. The first stationary subsea unit 3 will typically be a dynamic umbilical termination assembly, often referred to as DUTA. In addition, it is shown umbilical termination heads 4a, 4b, often referred to as UTHs.

A subsea umbilical is a bundle of functional components combined into one cable. The components can consist of cables and conduits that transfer hydraulic, chemicals, signals and electric power. The subsea umbilical can operate within the field (subsea to subsea), or from topsides to subsea. Umbilicals may be of two basic types; static or dynamic. Dynamic, typically where the umbilical is terminated at a floating production vessel or a floating production platform and extends unprotected down to the seabed. This dynamic type of umbilical is indicated with reference number 7 in fig. 1. A dynamic umbilical is therefore constantly moving as a result of the wave induced motion of the production vessel/platform as well as the wave and current induced forces acting on the umbilical itself. Static, where the umbilical extends down to the seabed through a J-tube which is attached to a fixed platform or from shore to seabed offshore. The term static umbilical is also used for umbilical lengths that lay on the seabed or in a trench, as well as for infield static umbilicals which run subsea-to-subsea. A static umbilical is an umbilical that is not exposed to motion. This static type of umbilical is indicated with reference number 8 in fig. 1.

US 2011/0290497 describes a subsea oil and/or gas production system comprising a host production facility and a plurality of subsea wells. A fluid conveying network is provided that connects each subsea well to the host production facility. A separate electrical power and data network is provided for conveying direct current electrical power and data, operatively connected to each subsea well for providing each subsea well with data transfer and electrical power services. The use of direct current ensures that the electrical power and data network can provide power over much greater distances than currently available, and the use of separate networks for conveying fluids and for providing electrical power and data transfer allows for a much more flexible system.

The near end (relative to the floating unit 2) of the static umbilical 8 is terminated at UTH 4a, while the far end (relative to the floating unit 2) of the static umbilical 8 is terminated at UTH 4b. Jumpers are used to connect the UTH 4a to the first unit 3 and to connect the UTH 4b to the second unit 5.

In fig. 1, the electrical power and data network is indicated by reference number 9. This network comprises DCFO cables, i.e. each cable is containing both DC conductors and fibre optic.

One object of the present invention is to provide a cost-efficient static service umbilical.

### SUMMARY OF THE INVENTION

The present invention relates to a static service umbilical comprising:
- a service fluid tube;
- at least two electrically insulated DC conductors provided radially outside of the fluid tube;
- a fibre optic cable provided radially outside of the fluid tube; and
- an outer sheath provided outside of the positive DC conductor, the negative DC conductor and the fibre optic cable.

The static service umbilical is suitable for establishing a connection between a first stationary subsea unit located on the seabed and a second stationary subsea unit located on the seabed.

In one aspect, the service fluid tube has an inner diameter larger than 50.8 mm, preferably between 50.8 mm and 88.9 mm.

In one aspect, the service fluid tube is a tube for transferring of a service fluid, such as MEG, methanol, etc.

In one aspect, the service fluid tube is provided in the centre of the static service umbilical.

In one aspect, the at least two electrically insulated DC conductors are laid up helically around the service fluid tube.

In one aspect, the at least two electrically insulated DC conductors and the fibre optic cable are laid up helically around the service fluid tube.

In one aspect, the static service umbilical comprises four electrically insulated DC conductors.

In one aspect, the four electrically insulated DC conductor are laid up helically around the service fluid tube.

In one aspect, the static service umbilical comprises:
- a further fibre optic cable provided radially outside of the fluid tube.

In one aspect, the static service umbilical comprises:
- fillers provided radially between the fluid tube and the outer sheath, for filling out gaps in the annulus between the fluid tube and the outer sheath.

In one aspect, the static service umbilical comprises:
- hydraulic fluid conduits provided radially between the fluid tube and the outer sheath.

In one aspect, the conductors, cables and/or conduits are at least partly separated from each other by fillers.

The present invention also relates to a subsea oil and/or gas production system, wherein the subsea oil and/or gas production system comprises:
- a first stationary subsea unit located on the seabed;
- a second stationary subsea unit located on the seabed at a distance from the first stationary subsea unit;
- a static service umbilical according to the above connected between the first stationary subsea unit and the second stationary subsea unit.

In one aspect, the fluid tube is transferring fluid between the between the first stationary subsea unit and the second stationary subsea unit.

In one aspect, the at least two electrically insulated DC conductors are transferring DC power between the first stationary subsea unit and the second stationary subsea unit.

In one aspect, the four electrically insulated DC conductors are transferring DC power between the first stationary subsea unit and the second stationary subsea unit. Two of the electrically insulated DC conductors are provided for redundancy.

In one aspect, the fibre optic cable is providing communication between the first stationary subsea unit and the second stationary subsea unit.

In one aspect, the further fibre optic cable is providing communication between the first stationary subsea unit and the second stationary subsea unit. The further fibre optic cable is provided for redundancy.

### DETAILED DESCRIPTION OF THE INVENTION

Embodiments of the invention will now be described in detail with reference to the enclosed drawings, wherein:
Fig. 1 illustrates a prior art subsea installation schematically;
Fig. 2 describes a cross section of a first embodiment of the static service umbilical;
Fig. 3 illustrates a subsea oil and/or gas production system using the static service umbilical.

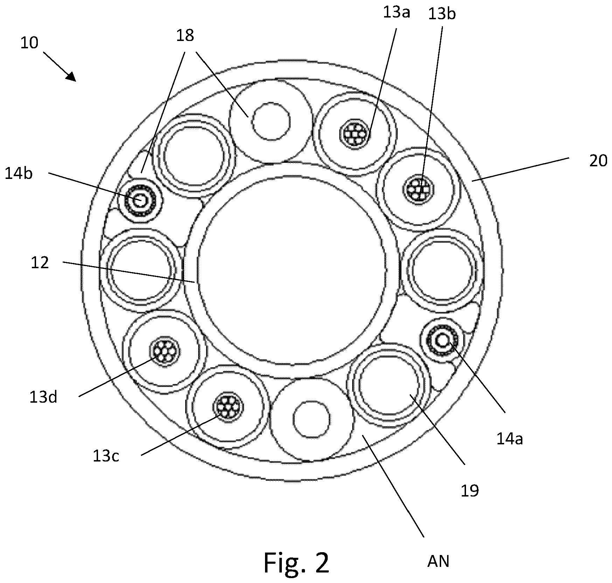

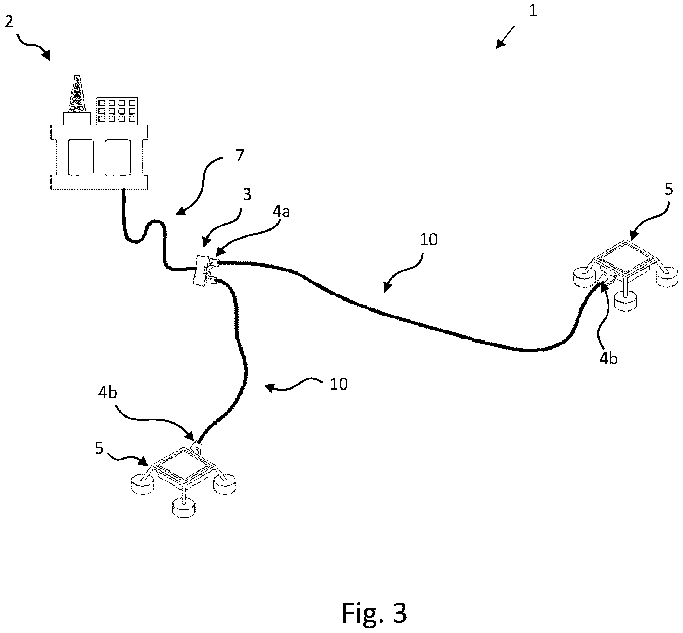

It is now referred to fig. 2 and fig. 3. Here, it is shown a static service umbilical 10. The static service umbilical 10 is connected between a first stationarily subsea unit 3 located on the seabed SB and a second stationary subsea unit 5 located on the seabed SB, as shown in fig. 3. Hence, the static service umbilical 10 is not exposed to movement. Fig. 3 shows two second stationary subsea units 5, each being connected to the one first stationarily subsea unit 3. Each end of the static service umbilical 10 will be terminated at a termination unit 4a, 4b, which again is connected to the units 3, 5 by means of jumpers.

The static service umbilical 10 comprises a service fluid tube 12 located centrally within the static service umbilical 10. The static service umbilical 10 further comprises an outer sheath 20 provided radially outside of the service fluid tube 12 at a distance from the service fluid tube 12, thereby forming an annulus AN between the service fluid tube 12 and the outer sheath 20.

In the present example, the service fluid tube 12 has an inner diameter of 50.8 mm (2.0"). Preferably, the inner diameter is between 50.8 mm (2.0") and 88.9 mm (3.5"). The service fluid tube 12 is used for transferring of a service fluid, such as MEG (Mono-ethylene Glycol) or methanol between the first stationarily subsea unit 3 and the second stationarily subsea unit 5.

The static service umbilical 10 further comprises two positive electrically insulated DC conductors 13a, 13c and two negative electrically insulated DC conductors 13b, 13d provided in the annulus AN. These DC conductors are transferring DC power between the first stationary subsea unit 3 and the second stationary subsea unit 5.

The static service umbilical 10 further comprises two fiber optic cables 14a, 14b provided in the annulus AN. The fibre optic cables 14a, 14b are providing communication between the first stationary subsea unit 3 and the second stationary subsea unit 5.

The static service umbilical 10 further comprises hydraulic fluid conduits 19 provided in the annulus AN.

The DC conductors 13a, 13b, 13c, 13d, the fibre optic cables 14a, 14b and the fluid conduits 19 are in the present embodiment laid up helically around the service fluid tube 12. Gaps in the annulus AN may be filled with fillers 18. The fillers 18 may also be used to separate the DC conductors 13a, 13b, 13c, 13d, the fibre optic cables 14a, 14b and the fluid conduits 19 from each other during manufacturing.

According to the above static service umbilical 10, a cost-efficient static service umbilical is achieved for longer field layouts, as no separate installation of the electrical power and data network of prior art is needed.

In addition, the above static service umbilical 10 may be terminated by means of FO subsea connectors and DC subsea connectors.

### LIST OF REFERENCE NUMBERS

- 1: subsea oil and/or gas production system
- 2: floating unit
- 3: first stationary subsea unit
- 4a, 4b: termination units
- 5: second stationary subsea unit
- 7: dynamic umbilical
- 8: static umbilical
- 9: electrical power and data network
- 10: static service umbilical
- 12: service fluid tube
- 13a: positive electrically insulated DC conductor
- 13b: negative electrically insulated DC conductor
- 13c: further positive electrically insulated DC conductor
- 13d: further negative electrically insulated DC conductor
- 14a: fibre optic cable
- 14b: further fibre optic cable
- 18: fillers
- 19: hydraulic fluid conduits
- 20: outer sheath
- AN: annulus
- SB: seabed
- SL: sealevel

## Claims

1. A static service umbilical (10) comprising:
- a service fluid tube (12);
- at least two electrically insulated DC conductors (13a, 13b, 13c, 13d) provided radially outside of the fluid tube (12);
- a fibre optic cable (14a) provided radially outside of the fluid tube (12); and
- an outer sheath (20) provided outside of the positive DC conductor (13a), the negative DC conductor (13b) and the fibre optic cable (14a).

2. The static service umbilical (10) according to claim 1, wherein the service fluid tube (12) has an inner diameter larger than 50.8 mm (2.0"), preferably between 50.8 mm (2.0") and 88.9 mm (3.5").

3. The static service umbilical (10) according to claim 1, wherein the service fluid tube (12) is a tube for transferring of a service fluid, such as MEG (Mono-ethylene Glycol), methanol, etc.

4. The static service umbilical (10) according to any one of the above claims, wherein the service fluid tube (12) is provided in the centre of the static service umbilical (10).

5. The static service umbilical (10) according to any one of the above claims, wherein the static service umbilical (10) comprises four electrically insulated DC conductors (13a, 13b, 13c, 13d).

6. The static service umbilical (10) according to claim 5, wherein the four electrically insulated DC conductors (13a, 13b, 13c, 13d) are laid up helically around the service fluid tube (12).

7. The static service umbilical (10) according to any one of the above claims, wherein the static service umbilical (10) comprises:
- a further fibre optic cable (14b) provided radially outside of the fluid tube (12).

8. The static service umbilical (10) according to any one of the above claims, wherein the static service umbilical (10) comprises:
- fillers (18) provided radially between the fluid tube (12) and the outer sheath (20), for filling out gaps in the annulus between the fluid tube (12) and the outer sheath (20).

9. The static service umbilical (10) according to any one of the above claims, wherein the static service umbilical (10) comprises:
- hydraulic fluid conduits (19) provided radially between the fluid tube (12) and the outer sheath (20).

10. A subsea oil and/or gas production system (1), wherein the subsea oil and/or gas production system (1) comprises:
- a first stationary subsea unit (3) located on the seabed (SB);
- a second stationary subsea unit (4) located on the seabed (SB) at a distance from the first stationary subsea unit (3);
- a static service umbilical (10) according to any one of claims 1 - 9 connected between the first stationary subsea unit (3) and the second stationary subsea unit (4).
